# EUROPÄISCHE PATENTSCHRIFT

(11) **EP 2 962 758 B1**
(45) Veröffentlichungstag und Bekanntmachung des Hinweises auf die Patenterteilung: **19.07.2017**
(21) Anmeldenummer: 14175207.1
(22) Anmeldetag: 01.07.2014
(51) Int. Cl.: B01L 3/00

(54) **FLUSSZELLE MIT EINEM SPEICHERBEREICH UND EINEM AN EINER SOLLBRUCHSTELLE AUFSCHLIESSBAREN TRANSPORTKANAL**
FLOW CELL HAVING A STORAGE SPACE AND A TRANSPORT CHANNEL THAT CAN BE OPENED AT A PREDETERMINED BREAKING POINT
CELLULE D'ÉCOULEMENT DOTÉE D'UNE ZONE DE STOCKAGE ET D'UN CANAL DE TRANSPORT POUVANT S'OUVRIR À UN POINT DE RUPTURE

(43) Veröffentlichungstag der Anmeldung: 06.01.2016
(73) Patentinhaber: thinXXS Microtechnology AG, 66482 Zweibrücken (DE)
(72) Erfinder: Weber, Lutz, 66482 Zweibrücken (DE)
(74) Vertreter: Patentanwälte Bernhardt / Wolff Partnerschaft mbB

(56) Entgegenhaltungen:
- EP-A1- 2 647 435
- EP-A1- 2 679 307
- DE-A1-102009 009 728
- DE-A1-102011 003 856

## Beschreibung

Die Erfindung betrifft eine Flusszelle, insbesondere zur Analyse oder/und Synthese von Substanzen, mit wenigstens einem Speicherbereich, der mit einem Kanal für den Transport von Fluid aus dem, in den oder/und durch den Speicherbereich verbunden ist, wobei der Kanal einen durch ein Substrat und eine mit dem Substrat verbundene flexible Folie begrenzten Kanalbereich aufweist, in welchem der Kanal verschlossen und an einer Sollbruchstelle unter Auslenkung der Folie aufschließbar ist, wobei die Folie einen den Kanalbereich bildende Ausnehmung in dem Substrat abdeckt und in der Ausnehmung eine den Kanal verschließende, einstückig mit dem Substrat verbundene Sperrwand angeordnet ist und die Sollbruchstelle durch einen aufbrechbaren Verbindungsbereich zwischen der Folie und einem der Folie zugewandten Randabschnitt der Sperrwand gebildet ist.

Eine Flusszelle, in welcher ein Kanal mit einer über den Kanal zu entleerenden Speicherkammer verbunden ist, geht aus der WO 2009/071078 A1 sowie der DE 10 2009 009 728 A1 hervor. Die Speicherkammer ist durch einen tiefgezogenen Bereich der im Übrigen ebenen, den Kanalbereich begrenzenden Folie gebildet. Die Folie besteht aus einer Aluminiumschicht mit einer der Speicherkammerinnenseite zugewandten Kunststoffbeschichtung. Außerhalb der Speicherkammer und des Kanalbereichs sowie an der Sollbruchstelle ist die Folie mit einer ebenen Oberfläche des Substrats oder einer diese bedeckenden weiteren Folie verklebt oder/und verschweißt.

Flusszellen der eingangs genannten Art gehen aus DE 10 2011 003 856 A1, EP 2 679 307 A1 und EP 2 647 435 A1 hervor. Die Sperrwände dieser bekannten Flusszellen weisen in Strömungsrichtung rechteckige Querschnitte auf.

Die durch Schweißen oder/und Kleben hergestellte Sollbruchstelle zwischen der Kunststoffbeschichtung der Folie und der ebenen Oberfläche des Substrats lässt sich in ihrer Flächenausdehnung nur schwer dosieren. Schwankungseinflüsse resultieren vor allem aus dem Verhalten der Kunststoffbeschichtung der Folie beim Schweißen, der Verteilung der durch ein Schweißwerkzeug erzeugten Temperatur, der erreichbaren Schweißspurbreite von ca. 1 mm, der Positioniergenauigkeit des Schweißwerkzeugs und damit der Reproduzierbarkeit des Abstandes der Sollbruchstelle zum Speicherbereich. Entsprechend schwankt unerwünscht die zum Aufbrechen der Sollbruchstelle erforderliche Kraft.

Der Erfindung liegt die Aufgabe zugrunde, eine neue Flusszelle der eingangs genannten Art mit einem eine Sollbruchstelle aufweisenden Kanalbereich zu schaffen, wobei die Aufbrechkraft der Sollbruchstelle in einem engeren Toleranzbereich liegt.

Diese Aufgabe wird erfindungsgemäß dadurch gelöst, dass sich die Dicke der Sperrwand zu der Folie hin verringert und für die Flächenausdehnung des Verbindungsbereichs die Abmessungen einer in dem Randabschnitt gebildeten, zu der Folie parallelen Randfläche der Sperrwand maßgebend sind.

Durch die erfindungsgemäße Konzentration des die Sollbruchstelle bildenden Verbindungsbereichs auf die an die Folie heranreichende Randfläche der Sperrwand weist der Verbindungsbereich eine definierte, von den Schweißbedingungen unabhängige Ausdehnung und Position auf. Entsprechend gering sind Schwankungen der zum Aufbrechen der Sollbruchstelle erforderlichen Kraft.

Wie weiter unten erläutert ist, kann die genannte Randfläche an eine zur Strömungsrichtung des Fluids senkrechte Linie angenähert sein.

Vorzugsweise ist der Kanal durch an der Sollbruchstelle anliegenden Fluiddruck oder mechanische oder/und pneumatische Auslenkung der Folie aufschließbar. Während Fluiddruck z.B. durch Auspressen einer Speicherkammer mit einer flexiblen Folienwand aufgebaut werden kann, lässt sich zum mechanischen oder/und pneumatischen Aufbrechen der Sollbruchstelle ein für die Flusszelle vorgesehenes Betriebsgerät einsetzen.

Es versteht sich, dass die Folie an dem Randabschnitt mit der Randfläche der Sperrwand verklebt oder/und verschweißt sein kann. Alternativ oder zusätzlich könnte eine lösbare Klemmverbindung durch ein mit der Flusszelle beweglich verbundenes, auf die Folie einwirkendes Klemmelement hergestellt sein.

Vorzugsweise ist die Sperrwand in einem Arbeitsgang mit dem Spritzgießen des Substrats hergestellt.

In einer besonders bevorzugten Ausführungsform der Erfindung schließt die Randfläche der Sperrwand bündig mit dem Öffnungsrand der in dem Substrat gebildeten Ausnehmung ab. So lässt sich sicherstellen, dass die Sperrwand mit ihrem der abdeckenden Folie zugewandten Randabschnitt bis an die Folie heranreicht und die Folie in einem Arbeitsgang sowohl mit dem Substrat als auch mit dem Randabschnitt der Sperrwand verklebt oder/und verschweißt werden kann.

Während es möglich ist, die Sperrwand ringförmig unter Absperrung einer entsprechend radialen Fluidströmung auszubilden, ist in der bevorzugten Ausführungsform die Sperrwand als ein an seinen Enden mit dem Substrat verbundener, die Ausnehmung in dem Substrat durchquerender Sperrsteg ausgebildet.

Die Dicke der Sperrwand kann sich z.B. zu der abdeckenden Folie hin derart verringern, dass die Folie gegen den Randabschnitt der Sperrwand nur linienförmig anliegt.

Entsprechend kann die Sperrwand im Querschnitt dreieck- oder teilkreisförmig ausgebildet sein. In einer weiteren Ausführungsform liegt der Randabschnitt der Sperrwand mit einer Abplattung gegen die Folie an. Die Länge der Abplattung in Strömungsrichtung und damit die Länge der Sollbruchstelle in dieser Richtung beträgt bevorzugt weniger als 0,5 mm, insbesondere weniger als 0,1 mm, ggf. weniger als 0,05 mm.

Die Ausnehmung öffnet vorzugsweise zu einer ebenen Fläche eines vorzugsweise plattenförmigen Substrats und die die Ausnehmung abdeckende Folie ist vorzugsweise eine ebene Folie.

In einer weiteren Ausführungsform der Erfindung ist der Kanal in dem die Sollbruchstelle aufweisenden Kanalbereich gegenüber sich daran anschließenden Kanalbereichen im Querschnitt verengt oder erweitert. Entsprechend verlängert oder verkürzt kann er Sperrsteg sein. Da die Aufbrechkraft der Sollbruchstelle von der Geometrie des Verbindungsbereichs zwischen der Folie und dem Sperrsteg abhängt, kann die Aufbrechkraft durch geeignete Wahl der Verbreiterung oder Verengung eingestellt werden. Vorzugsweise liegt die Aufbrechkraft durch einen mechanischen, den Speicherbereich komprimierenden Aktor unter 20 N, insbesondere unter 10 N, ggf. unter 5 N.

Vorzugsweise liegt die Sollbruchstelle in zur Plattenebene des Substrats senkrechter Projektion im Projektionsbereich der Speicherkammer. In dieser platzsparenden Ausführungsform befindet sich ggf. die Speicherkammer auf einer Seite des plattenförmigen Substrats, während die den Kanalbereich bildende Ausnehmung auf der anderen Plattenseite angeordnet ist.

Insbesondere in letzterer Ausführungsform kann die Speicherkammer aus einer Folie bestehen, die eine Aluminiumschicht mit einer der Speicherkammerinnenseite zugewandten Kunststoffbeschichtung aufweist, wobei die Kunststoffbeschichtung flächig auf das Substrat durch Schweißen oder Kleben aufgebracht ist und die Sollbruchstelle zwischen dem plattenförmigen Substrat und einer Abdeckfolie aus Kunststoff, vorzugsweise aus dem gleichen Kunststoff wie das Substrat, gebildet ist. Zur Herstellung der Sollbruchstelle aus identischen Kunststoffmaterialien kommt z.B. thermisches Schweißen, Ultraschallschweißen oder Laserschweißen in Betracht.

In weiterer Ausgestaltung der Erfindung kann der Kanal mehrere Sollbruchstellen aufweisen und insbesondere einer Sollbruchstelle ein Funktionselement der Flusszelle nachgeschaltet sein, wie z.B. eine Trockenreagenz.

Darüber hinaus kann die Trockenreagenz zwischen zwei Sollbruchstellen eingeschlossen sein.

Eine die Speicherkammer begrenzende Folie kann identisch mit einer den Kanalbereich begrenzenden Folie sein, insbesondere dann, wenn die Speicherkammer und ein mit der Speicherkammer verbundener Kanalbereich beide auf einer Seite eines plattenförmigen Substrats angeordnet sind.

Die Erfindung wird nachfolgend anhand von Ausführungsbeispielen und der beiliegenden, sich auf diese Ausführungsbeispiele beziehenden Zeichnungen näher erläutert: Es zeigen:
- Fig. 1: eine Flusszelle mit mehreren erfindungsgemäßen Fluidtransportkanälen in einer Vorderansicht,
- Fig. 2: die Flusszelle von Fig. 1 in einer Rückansicht ohne Abdeckfolie,
- Fig. 3: einen eine Sollbruchstelle aufweisenden Kanalbereich eines Transport-kanals der Flusszelle von Fig. 1, teilweise ohne Abdeckfolie,
- Fig. 4: verschiedene Ausführungsbeispiele in einer Flusszelle verwendbarer Fluid-speicher mit einem mit dem Fluidspeicher verbundenen erfindungsgemäßen Transportkanal,
- Fig. 5: drei weitere Ausführungsbeispiele für die Ausbildung von Sollbruchstellen in Transportkanälen nach der Erfindung,
- Fig. 6a: einen Transportkanal mit zwei Sollbruchstellen,
- Fig. 6b: einen Transportkanal mit einer ringförmigen Sollbruchstelle,
- Fig. 7: Transportkanäle nach der Erfindung mit einer daran angrenzend angeordneten Trockenreagenz,
- Fig. 8: Transportkanäle mit Sollbruchstellen, die sich durch äußere Aktuatoren aufbrechen lassen,
- Fig. 9: einen mit zwei Speicherkammern verbundenen Transportkanal nach der Erfindung,
- Fig. 10: Transportkanäle nach der Erfindung zum Befüllen eines Speicherraums einer Flusszelle,
- Fig. 11: zur teilweisen Befüllung durch Transportkanäle nach der Erfindung vorgesehene Speicher.

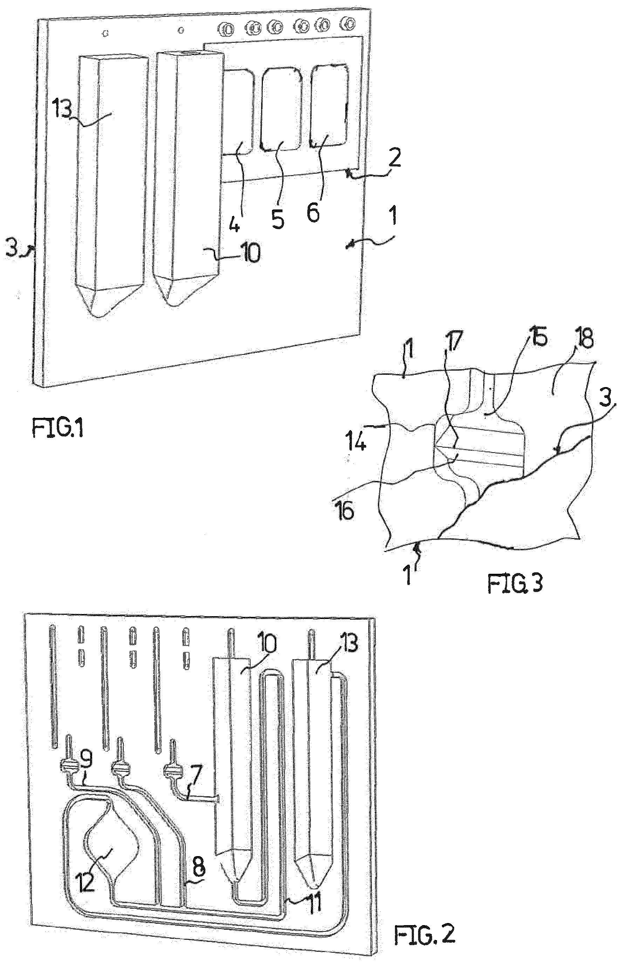

Eine in Fig. 1 gezeigte mikrofluidische Flusszelle, die an ein (nicht gezeigtes) Betriebsgerät anschließbar ist, umfasst ein im Wesentlichen plattenförmiges Substrat 1, das einstückig im Spritzgießverfahren aus Kunststoff hergestellt ist, z.B. aus PP, PE, COC, PC, PMMA oder einer Mischung aus diesen Kunststoffen.

Auf seiner in Fig. 1 sichtbaren Seite ist das Substrat über einen Teil seiner Plattenfläche mit einer Folie 2 verklebt oder/und verschweißt. Auf der dieser Seite abgewandten Seite des Substrats 1 ist die gesamte Plattenfläche mit einer ebenen Folie 3 verbunden, welche zu dieser Plattenfläche hin offene Ausnehmungen im Substrat 1 abdeckt und verschließt.
Tiefgezogene Bereiche der Folie 2 bilden in dem gezeigten Beispiel drei Speicherkammern 4,5 und 6 für die Aufnahme von Reagenzflüssigkeiten. Die Folie 2 besteht aus einem Aluminium-Kunststoff-Laminat, dessen nach außen weisende Aluminiumschicht eine Dampfsperre für die Reagenzflüssigkeiten in den Speicherkammern bildet.

Die Abdeckfolie 3 besteht in dem gezeigten Beispiel aus dem gleichen Kunststoffmaterial wie das Substrat 1, ggf. aber auch aus einem Aluminium-Kunststoff-Laminat.

Wie Fig. 2 zeigt, ist die Speicherkammer 4 über einen Kanal 7 mit einer Kammer 10 für die Aufnahme einer zu untersuchenden Probesubstanz verbindbar. Die Probenkammer 10 steht ihrerseits über einen Kanal 11 und einen Reaktions- oder Detektionsbereich 12 zur Untersuchung der Probensubstanz in Verbindung mit einer Abfallkammer 13. Die Speicherkammern 5 und 6 lassen sich über Kanäle 8 und 9 mit dem Kanal 11 verbinden.

Die Kanäle 7 bis 9 weisen jeweils einen in Fig. 3 gesondert dargestellten, verbreiterten Kanalbereich 14 auf, in welchem der Kanal in Durchströmungsrichtung verschlossen und eine aufschließbare Sollbruchstelle gebildet ist.

Eine den jeweiligen Kanalbereich 14 bildende und für die Größe des Kanalquerschnitts maßgebende Ausnehmung 15 wird von einem Sperrsteg 16 mit in dem gezeigten Beispiel dreieckförmigem Querschnitt durchquert. Ein der Abdeckfolie 3 zugewandter Randabschnitt 17 des Sperrstegs 16 fluchtet mit der an die Ausnehmung 15 angrenzenden ebenen Plattenfläche 18 des Substrats 1 und ist mit der Abdeckfolie 3 verbunden. Der einstückig mit dem Substrat 1 verbundene Sperrsteg 16 versperrt auf diese Weise vollständig den jeweiligen Kanal.

Die mit dem Substrat 1 verklebte oder/und verschweißte Abdeckfolie 3 ist im Bereich des Randabschnitts 17 auch mit dem Sperrsteg 16 verbunden, wobei diese Verbindung eine aufbrechbare Sollbruchstelle bildet. Bei anliegendem Fluiddruck, der durch Zusammenpressen eines tiefgezogenen Bereichs der Folie 2 und Auspressen der betreffenden Speicherkammer 4,5 oder 6 erzeugt werden kann, bricht die Verbindung zwischen dem Sperrsteg 16 und der Abdeckfolie 3 unter Auslenkung der Abdeckfolie 3 auf.

Der Randabschnitt 17 des Sperrstegs 16 bildet einen in seinen Abmessungen definierten Verbindungsbereich der eine reproduzierbare Verschlussfestigkeit und damit ein zuverlässiges Aufbrechen der Sollbruchstelle bei einem bestimmten Fluiddruck ermöglicht. Die Länge des Randabschnitts 17 ist vorzugsweise < 0,5 mm, insbesondere < 0,1 mm, ggf. sogar < 0,05 mm.

In dem gezeigten Beispiel ist die Folie 3 mit dem Sperrsteg 16 verklebt oder/und verschweißt. Zusätzlich oder alternativ kommt, wie weiter unten dargelegt ist, auch eine Klemmverbindung zwischen Sperrsteg 16 und Abdeckfolie 3 in Betracht.

Der Einfachheit halber sind weitere Details der in Fig. 1 und 2 gezeigten Flusszelle hier nicht beschrieben. Es versteht sich, dass eine Flusszelle mit einem Kanal von der Art, wie ihn die Flusszelle von Fig. 1 und 2 mehrfach aufweist, auch gänzlich anders als die in Fig. 1 und 2 gezeigte Flusszelle aufgebaut sein und im Extremfall z.B. einen derartigen Kanal nur als einziges Funktionsteil aufweisen kann.

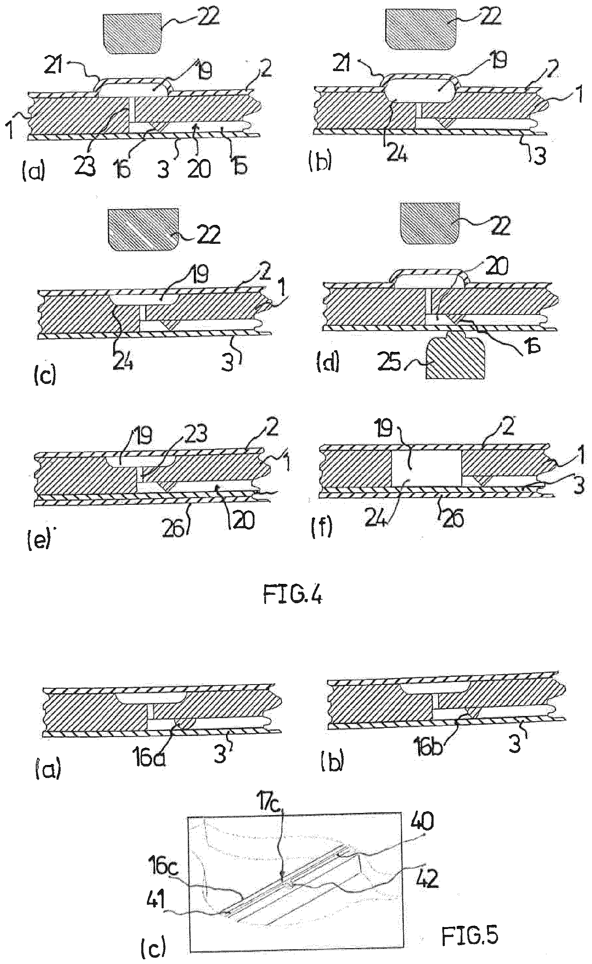

Fig. 4 zeigt ausschnittsweise Flusszellen mit einer Speicherkammer 19 und einem Kanal 20 mit einer Sollbruchstelle an einem Sperrsteg 16. Die Speicherkammer 19 ist durch eine Folie 2 begrenzt, die mit einem plattenförmigen Substrat 1 auf dessen einer Seite verklebt oder/und verschweißt ist. Eine mit dem plattenförmigen Substrat 1 auf dessen anderer Seite verklebte oder/und verschweißte Abdeckfolie 3 schließt unter Begrenzung des Kanals 20 eine mit der Speicherkammer 19 in Verbindung stehende Kanalausnehmung 15 in dem Substrat 1 ab.

Gemäß Fig. 4a ist ein auf einen tiefgezogenen, die Speicherkammer 19 bildenden Bereich 21 der Folie 2 einwirkender Aktorstempel 22 eines im Übrigen nicht gezeigten Betriebsgeräts in seinen Abmessungen schmaler ausgebildet als der tiefgezogene Bereich 21, so dass dieser beim Auspressen von Fluid aus der Speicherkammer 19 seitlich definiert einknickt und damit ein kontrollierter Druckaufbau zum Öffnen der Sollbruchstelle möglich wird.

In zur Plattenebene des Substrats 1 senkrechter Projektion befindet sich der Sperrsteg 16 in dem Kanal 20 innerhalb des Projektionsbereichs der Speicherkammer 19. Speicher und Sollbruchstelle lassen sich damit platzsparend in einem engen Bereich der Flusszelle unterbringen.

Bei dem Ausführungsbeispiel von Fig. 4b ist eine Speicherkammer 19 zwischen einer Folie 2 und einem Substrat 1 nicht allein durch einen tiefgezogenen Bereich 21 der Folie 2 sondern auch eine Ausnehmung 24 in dem Substrats gebildet. Die Ausnehmung 24 und die Geometrie des Aktorstempels 22 sind so gewählt, dass ein vollständiges Entleeren des Speicherbereichs möglich ist, indem in der Endlage des Aktorstempels 22 die Folie 21 so verformt wird, dass diese weitgehend an der Kontur der Ausnehmung 24 anliegt. Zu diesem Zweck ist die Kontur des Aktorstempels 22 um den Betrag der zweifachen Dicke der Folie 2 gegenüber der Kontur der Ausnehmung 24 zurückversetzt.

Gemäß Ausführungsbeispiel von Fig. 4c ist für das Volumen einer Speicherkammer 19 allein eine solche Ausnehmung 24 im Substrat 1 maßgebend.

Das Ausführungsbeispiel von Fig. 4d entspricht dem Ausführungsbeispiel von Fig. 4a. Ein bewegliches Element 25 lässt sich durch ein Betriebsgerät oder manuell in einer Verschlussstellung halten, oder es ist durch nicht gezeigte Mittel wie Hinterschnitte oder Schnappverschlüsse fest aber lösbar mit dem Substrat 1 verbunden, sodass durch Druckaufbau im Kanal 20 mit Hilfe eines Aktorstempels 22 ein Aufschluss der Sollbruchstelle am Sperrsteg 16 nicht möglich ist. Erst in einer Stellung, in welcher das Element 25 von der in Fig. 4d gezeigten Halteposition zurückgezogen ist, lässt sich die Sollbruchstelle aufbrechen. Das Element 25 kann manuell oder durch das Betriebsgerät zurückgezogen werden. Bei Verwendung des beweglichen Elements 25 kann auf Verklebung oder Verschweißung der Sollbruchstelle verzichtet werden. Durch Zurücksetzen des Elements 25 sinkt der Kraftbedarf zum Aufschließen der Sollbruchstelle um den Betrag, der notwendig wäre, um eine Schweiß- oder Klebeverbindung aufzubrechen.

Das Ausführungsbeispiel von Fig. 4e entspricht dem Ausführungsbeispiel von Fig. 4c bis auf eine weitere Folie 26, die eine Dampfsperre für aus dem Speicher 19 in den Kanal 20 gelangendes Fluid bildet. Die Folie 26 besteht z.B. aus Aluminium und weist eine integrierte, z.B. drucksensitive Klebeschicht auf. Die Folie 26 kann alternativ nur lokal und nicht im Bereich der Sollbruchstelle mit der Folie 3 verbunden sein.

Eine solche Sperrfolie 26 ist insbesondere bei dem Ausführungsbeispiel von Fig. 4f von Vorteil, bei dem eine Speicherkammer 19 durch eine durch ein Substrat 1 durchgehende Ausnehmung 24 gebildet ist und der Speicherinhalt daher unmittelbar mit der Abdeckfolie 3 in Kontakt kommt. Bei dem Ausführungsbeispiel von Fig. 4f kann ein, die Speicherkammer 18 mit der Ausnehmung 15 verbindender Kanalabschnitt 23 entfallen.

In Fig. 5 gezeigte Ausführungsbeispiele entsprechen dem Ausführungsbeispiel von Fig. 4c bis auf die Gestaltung des Querschnitts eines die Sollbruchstelle bildenden Sperrstegs.

Gemäß Fig. 5a ist ein Sperrsteg 16a im Querschnitt nicht dreieckförmig, sondern halbkreisförmig ausgebildet. Auch bei einem solchen Querschnitt liegt der Sperrsteg linienförmig gegen die Abdeckfolie 3 an. Ein solcher Sperrsteg lässt sich vorteilhaft mit geringerem Spritzdruck als ein im Querschnitt dreieckiger Sperrsteg beim Spritzgießen des Substrats 1 herstellen.

Fig. 5b zeigt einen Sperrsteg 16b mit einer der Abdeckfolie 3 zugewandten Abplattung. Die Abplattung bildet eine ebene, zu der Folie 3 parallele Randfläche des Sperrstegs 16, wobei sich diese Randfläche mit einem Verbindungsbereich zwischen der Folie 3 und dem Sperrsteg 16 deckt und der Verbindungsbereich eine Sollbruchstelle bildet. Die in Strömungsrichtung vordere und hintere Kante der Abplattung begrenzen den Verbindungsbereich.
Bei dem Ausführungsbeispiel gemäß Fig. 5a ist die zur Folie 3 parallele Randfläche des Sperrstegs 16 jeweils an eine sich quer zur Richtung der Fluidströmung erstreckende Linie angenähert.

Fig. 5c zeigt einen Sperrsteg 16c mit einem der (nicht gezeigten) Folie 3 zugewandten Randabschnitt 17c, an dem ein gegenüber dem übrigen Sperrsteg schmalerer Randsteg 40 mit einer zur Folie 3 parallelen, entsprechend schmalen Randfläche 41 gebildet ist. Vorteilhaft lässt sich ein solcher stufenförmiger Sperrsteg mit geringem Werkzeugaufwand im Spritzgießverfahren herstellen. Die zur Folie 3 parallele Randfläche 41 weist in der Längsmitte des Randstegs 40 eine durch einen Vorsprung des Randstegs 40 gebildete Ausbuchtung 42 auf. Diese entgegen der Strömungsrichtung vorstehende Ausbuchtung 42 bildet beim Aufbrechen der Sollbruchstelle einen Initialbereich, welche ein symmetrisches Aufbrechen des Sollbruchstelle von der Stegmitte nach den Seiten hin fördert und so zu einer hohen Reproduzierbarkeit der zum Aufbrechen der Sollbruchstelle erforderlichen Kraft beiträgt.

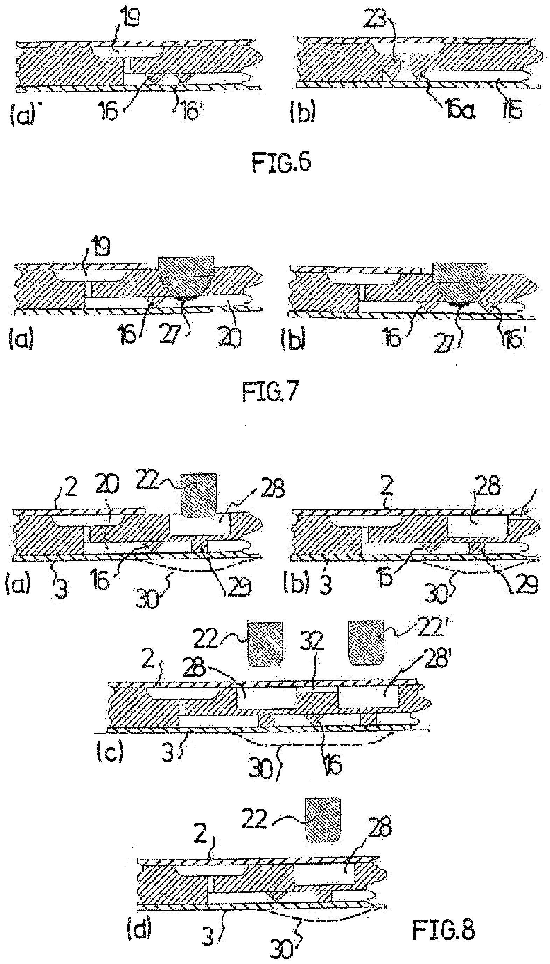

Fig. 6a zeigt ein weitgehend Fig. 4c entsprechendes Ausführungsbeispiel, bei dem jedoch anstelle nur einer Sollbruchstelle zwei Sollbruchstellen durch zwei Sperrstege 16 und 16' gebildet sind. Durch die zwei Sollbruchstellen lässt sich ein besonders dichter Verschluss der Speicherkammer 19 erreichen. Der zum Aufbrechen der Sollbruchstellen erforderliche Fluiddruck könnte unterschiedlich und z.B. für die zweite Sollbruchstelle bei 16' höher als für die erste Sollbruchstelle bei 16 sein, was z.B. durch unterschiedliche Breiten der Sollbruchstellen einstellbar wäre.

Fig. 6b zeigt ein Fig. 4c ähnliches Ausführungsbeispiel, bei dem abweichend hiervon die Ausmündung eines die Speicherkammer 19 mit der Ausnehmung 15 verbindenden Kanalabschnitts 23 von einem ringförmigen Sperrsteg 16a umgeben ist. Der ringförmige Sperrsteg 16a kann als Vollring oder als Segment eines Vollrings ausgebildet sein.

Fig. 7 zeigt Ausführungsbeispiele, in denen in einem Kanal 20 einer Sollbruchstelle eine Trockenreagenz 27 nachgeordnet ist. Vorteilhaft kann diese Trockenreagenz durch eine aus einer Speicherkammer 19 entnommene Flüssigreagenz geeignet rückgelöst werden. Vor Öffnung der Sollbruchstelle ist die Trockensubstanz zweckmäßig von der Speicherkammer 19 isoliert.

Bei dem Ausführungsbeispiel von Fig. 7b ist der Trockenreagenz nochmals eine Sollbruchstelle, die durch einen weiteren Sperrsteg 16' gebildet ist, nachgeordnet. Dadurch werden von der Trockenreagenz während der Lagerung Umgebungseinflüsse noch wirksamer abgehalten.

Fig. 8 zeigt ausschnittsweise Ausführungsbeispiele für Flusszellen, bei denen gesonderte Einrichtungen zum Aufbrechen einer durch einen Sperrsteg 16 gebildeten Sollbruchstelle vorgesehen sind.

Bei dem Ausführungsbeispiel von Fig. 8a ist in einem Substrat 1 durch eine Ausnehmung 28 eine Schwachstelle derart gebildet, dass sich mit Hilfe eines Aktorstempels 22 eine Abdeckfolie 3 über einen Vorsprung 29 gemäß Strichlinie 30 auslenken und die bei 16 gebildete Sollbruchstelle aufbrechen bzw. bei geöffneter Sollbruchstelle der Durchlassquerschnitt des Kanals 20 vergrößern lässt. Insbesondere kann durch dieses separate Öffnen der Sollbruchstelle das Entleeren des Speichers 19 mit geringerem Druck erfolgen. Außerdem lässt sich bei geöffneter Sollbruchstelle vorteilhaft deren Strömungswiderstand regulieren.

Bei dem Ausführungsbeispiel von Fig. 8b ist anstelle eines mechanischen Aktorstempels 22 ein Einlasskanal 31 für ein das Substrat entsprechend verformendes Druckgas gebildet.

Bei dem Ausführungsbeispiel von Fig. 8c sind zwei in Strömungsrichtung vor und in Strömungsrichtung hinter einer Sollbruchstelle angeordnete Schwachstellen zum Auslenken einer Folie 3 vorgesehen, wobei Schwachstellen bildende Ausnehmungen 28 und 28' über einen Kanal 32 miteinander verbunden sind. Eine Folie 2 lässt sich durch Aktorstempel 22 und 22' einbeulen, so dass in den Ausnehmungen 28,28' ein das Substrat 1 verformender, die Folie 3 gemäß Strichlinie 30 auslenkender Gasdruck entsteht.

Nach dem gleichen Prinzip arbeitet das Ausführungsbeispiel von Fig. 8d mit nur einer Ausnehmung 28 und einem Aktorstempel 22.

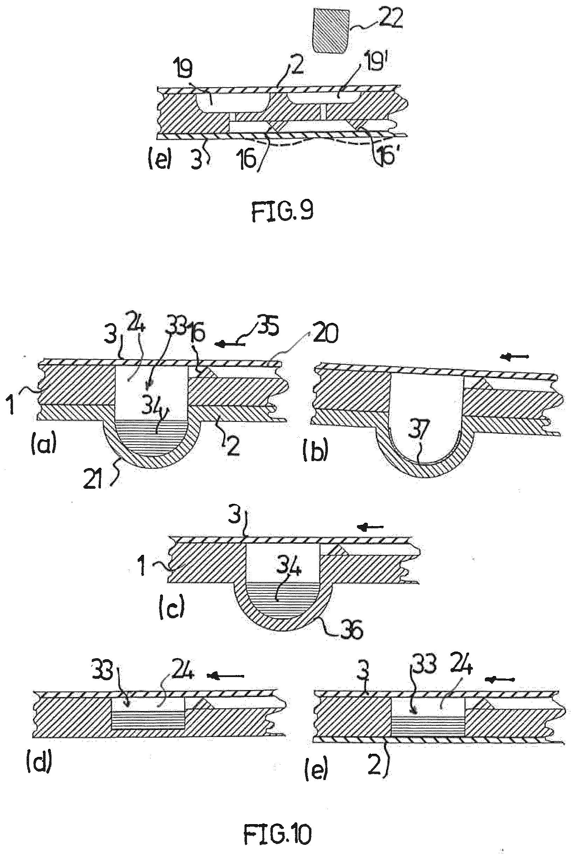

Fig. 9 zeigt ein Ausführungsbeispiel mit einer Speicherkammer 19 und einer weiteren Speicherkammer 19'. Verformung einer Folie 2 durch einen Aktorstempel 22 führt zum Druckaufbau in der Kammer 19' und damit zum Öffnen zweier durch Sperrstege 16 und 16' gebildeter Sollbruchstellen. Der Reagenztransport aus der Speicherkammer 19 kann danach aufgrund der bereits geöffneten Sollbruchstellen kontrollierter und mit weniger Druck erfolgen.

Fig. 10 zeigt ausschnittsweise Flusszellen mit einer nur teilweise mit einem Fluid 34 gefüllten Speicherkammer 33, welche durch einen eine Sollbruchstelle bildenden Sperrsteg 16 isoliert ist. Die Speicherkammer 33 lässt sich über einen Kanal 20 mit einem weiteren, z.B. zu analysierenden Fluid auffüllen. Bei Druckaufbau durch ein gemäß Pfeil 35 anströmendes Fluid wird eine an dem Sperrsteg 16 gebildete Sollbruchstelle aufgebrochen. Bei weiterem Druckaufbau wird das Gas des luft- oder gasgefüllten Teilbereichs des Speicherraums 33 zunächst komprimiert und Fluid gelangt in den Speicherraum, das sich mit dem dort gespeicherten Fluid 34 vermischen und ggf. mit diesem reagieren kann. Nach der Befüllung führt ein Druckabbau zum Entweichen der komprimierten Luft in der zu Pfeil 35 entgegengesetzten Richtung. Dies kann gleichzeitig mit mehreren Speicherbereichen 33 erfolgen, wenn deren angrenzende Kanalbereiche 20 mit einer Druckquelle und einer Fluidquelle verbunden sind. Nach dem Auffüllen und dem Druckaufbau verhindert der Sperrsteg 16 ein Zurückfließen des Fluidgemischs.

Das Volumen der Speicherkammer 33 ist zum Teil durch eine durchgehende Ausnehmung 24 in einem Substrat 1 und ferner einen tiefgezogenen Bereich 21 einer Folie 2 gebildet, welche aus einem Aluminium-Kunststoff-Laminat oder nur aus einem Kunststoff bestehen und durch Spritzgießen hergestellt sein kann.

Bei dem Ausführungsbeispiel von Fig. 10b enthält die Speicherkammer 33 eine Trockenreagenz 37.

Das Ausführungsbeispiel von Fig. 10c unterscheidet sich von dem Ausführungsbeispiel von Fig. 10a dadurch, dass das Speichervolumen der Speicherkammer 33 ausschließlich durch ein Substrat 1 mit einer Ausbuchtung 36 gebildet ist.

Bei dem Ausführungsbeispiel von Fig. 10d fehlt eine solche Ausbuchtung. Maßgebend für das Volumen der Speicherkammer 33 ist ausschließlich eine einseitig offene Ausnehmung 24 im plattenförmigen Substrat 1.

Bei dem Ausführungsbeispiel von Fig. 10e ist die Ausnehmung 24 durchgehend und auf beiden Seiten durch eine Folie 2 bzw. 3 abgedeckt.

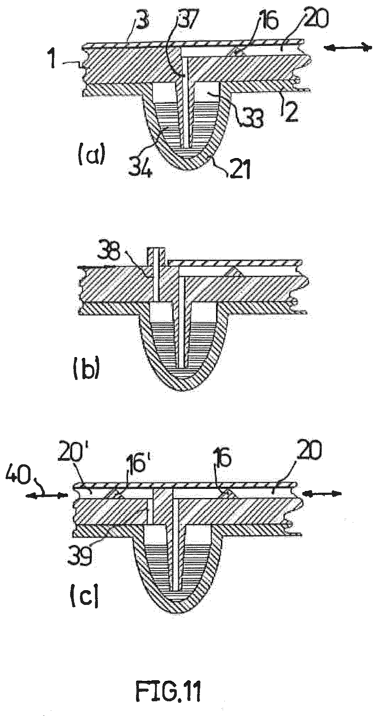

Bei einem in Fig. 11 gezeigten Ausführungsbeispiel ist eine Speicherkammer 33 teilweise mit einem Fluid 34 gefüllt. In die Speicherkammer 33 hinein ragt eine Rohrleitung 37, welche in das Fluid 34 eintaucht. Die Rohrleitung 37 steht in Verbindung mit einem durch einen Sperrsteg 16 verschlossenen Kanal 20.

Über den Kanal 20 und die Rohrleitung 37 kann nach Aufbrechen einer an dem Sperrsteg 16 gebildeten Sollbruchstelle ein zu untersuchendes Probenfluid in die Speicherkammer 33 geleitet werden, wo das Probenfluid mit dem eine Reagenz bildenden Fluid 34 in Kontakt kommt.

Zum Aufbrechen der Sollbruchstelle an das Probenfluid angelegter Förderdruck sorgt nach deren Öffnung für Verdrängung der in Flussrichtung hinter dem Sperrsteg 16 im Kanal 20 und der Rohrleitung 37 befindlichen Luft, die in dem Fluid 34 nach oben steigt. In die Speicherkammer 33 schließlich eintretendes Probenfluid sorgt für einen Druckaufbau in der Speicherkammer 33 durch Kompression der Luft über dem Fluidspiegel des Fluids 34.

Bei Reduktion des Förderdrucks fließt daher ein Gemisch aus dem Probenfluid und dem Reagenzfluid 34 zurück in die Rohrleitung 37 und ggf. den Kanal 20. Durch abwechselndes Erhöhen und Absenken des Förderdrucks lässt sich das Gemisch entsprechend bewegen und durch die Bewegung weiter homogenisieren.

Durch weitergehende Absenkung des Förderdrucks lässt sich das Gemisch schließlich über die Rohrleitung 37 und den Kanal 20 zu einem dieses weiterverarbeitenden Teil der Flusszelle ableiten oder es verbleibt zur Analyse, z.B. optischen Analyse, in der Speicherkammer 33.

Der gleiche Aufbau einer Speicherkammer ließe sich auch zur Resuspendierung einer in der Speicherkammer vorgesehenen Trockenreagenz, wie der Trockenreagenz 37 von Fig. 10b, verwenden.

Der Aufbau gemäß Fig. 11 lässt sich auch lediglich zum Entleeren der Speicherkammer 33 nutzen, indem über den Kanal 20 Druckgas zugeführt und in dem Speicherkammerbereich über dem Fluidspiegel komprimiert wird. Das Druckgas kann dann anschließend das Fluid 34 zum Abtransport aus der Speicherkammer 33 heraus in die Rohrleitung 37 und den Kanal 20 hineindrücken.

Eine den Speicher bildende Folie 21 kann elastisch verformbar ausgebildet sein, so dass sich das Volumen der Speicherkammer 33 durch den Förderdruck vergrößern lässt, so dass größere Probenmengen verarbeitet werden können. Ferner wird durch die Volumenvergrößerung der Druckaufbau in der Speicherkammer 33 reduziert.

Das Ausführungsbeispiel von Fig. 10b unterscheidet sich von dem Ausführungsbeispiel von Fig. 10a durch einen in die Speicherkammer 33 mündenden Befüllungskanal 38, durch den in die Speicherkammer z.B. mittels manueller oder automatischer Pipettierung oder eine den Befüllungskanal druchdringende Nadel eine Reagenz eingefüllt werden kann. Es versteht sich, dass bei diesem Vorgang verdrängte Luft aus der Speicherkammer 33 entweichen können muss. Nach Befüllung lässt sich der Befüllungskanal 38 durch Verschweißen, Verkleben oder/und mittels eines Verschlussstopfens abdichten.

Bei einem in Fig. 11c dargestellten Ausführungsbeispiel ist ein zweiter Kanal 20' mit einem Sperrsteg 16' vorgesehen. Der Kanal 20' steht über einen über dem Fluidspiegel des Fluids 34 mündenden Durchgang 39 in Verbindung mit der Speicherkammer 33.

Nachdem an den Sperrstegen 16,16' vorgesehene Sollbruchstellen aufgebrochen sind, kann über den Kanal 20 und die Rohrleitung 37 ein Probenfluid zugeführt werden, wobei verdrängte Luft durch den Durchgang 39 und den Kanal 20' entweichen kann. In der Speicherkammer 33 baut sich kein Druck auf. Durch Druckgas, das über den Kanal 20' an den Fluidspiegel in der Speicherkammer 33 angelegt wird, lässt sich ein gebildetes Probenfluid-Reagenz-Gemisch nahezu restlos aus der Speicherkammer 33 über die Rohrleitung 37 und den Kanal 20 entfernen.

Die Kunststoffbeschichtung der aus einem Aluminium-Kunststoff-Laminat gebildeten Folien 2 in den oben beschriebenen Flusszellen besteht vorzugsweise aus dem gleichem Kunststoffmaterial wie das jeweilige Substrat 1.
Bei dem Fluid in den oben beschriebenen Speicherkammern kann es sich statt einer Flüssigkeit auch nur um Luft oder ein anderes, zum Fluidtransport in der Flusszelle verwendbares Druckgas handeln.

Zweckmäßig ist das Substrat, insbesondere auf seiner der Folie 2 zugewandten Seite, mit einer die Verbindung mit der Folie 2,3 erleichternden Oberflächenstrukturierung, z.B. mit Gräben, versehen. Die Gräben können insbesondere um den Speicherbereich umlaufen. Bevorzugte Querschnittsabmessungen der Gräben sind 0,1 x 0,1 mm² bis 1 x 1 mm². Vorzugsweise werden ein bis drei Gräben gebildet. Beim Aufkleben oder Aufschweißen kann der Kleber oder die aufgeschmolzene Kunststoffschicht der Folie 2 in die Gräben eindringen und sich mit diesen verhaken, was die Haftung der Folie mit dem Substrat 1 verbessert.

Zur Verbindung der Abdeckfolie 3 mit dem Substrat kommt insbesondere Laserschweißen oder thermisches Bonden in Betracht, auch durch Lösungsmittel unterstütztes Bonden. Mit diesen Verfahren lassen sich Verbindungsbereiche der Sollbruchstellen mit konstanten Abmessungen und konstanter Festigkeit erzielen.

## Patentansprüche

1. Flusszelle, insbesondere zur Analyse oder/und Synthese von Substanzen, mit wenigstens einem Speicherbereich (10;19;33), der mit einem Kanal (7-9;20) zum Transport von Fluid aus dem, in den oder/und durch den Speicherbereich verbunden ist, wobei der Kanal einen durch ein Substrat (1) und eine mit dem Substrat verbundene Folie (3) begrenzten Kanalbereich (14) aufweist, in welchem der Kanal verschlossen und an einer Sollbruchstelle unter Auslenkung der Folie aufschließbar ist, wobei die Folie eine den Kanalbereich bildende Ausnehmung (15) in dem Substrat abdeckt und in der Ausnehmung eine den Kanal verschließende, einstückig mit dem Substrat verbundene Sperrwand (16) angeordnet und die Sollbruchstelle durch einen aufbrechbaren Verbindungsbereich zwischen der Folie und einem der Folie zugewandten Randabschnitt (17) der Sperrwand gebildet ist,
**dadurch gekennzeichnet,**
**dass** sich die Dicke der Sperrwand (16) zu der Folie (3) hin verringert und für die Flächenausdehnung des Verbindungsbereiches die Abmessungen einer in dem Randabschnitt gebildeten, zu der Folie parallelen Randfläche der Sperrwand maßgebend sind.

2. Flusszelle nach Anspruch 1,
**dadurch gekennzeichnet**,
die Randfläche an eine zur Strömungsrichtung senkrechte Linie angenähert ist.

3. Flusszelle nach Anspruch 1 oder 2,
**dadurch gekennzeichnet,**
**dass** die Sperrwand als die Ausnehmung (15) durchquerender, an seinen Enden sowie an dem der Randfläche gegenüberliegenden Randabschnitt mit dem Substrat (1) verbundener Sperrsteg (16) ausgebildet ist.

4. Flusszelle nach einem der Ansprüche 1 bis 3,
**dadurch gekennzeichnet,**
**dass** die Sperrwand (16) im Querschnitt dreieck- oder teilkreisförmig, ggf. mit einer der Folie zugewandten Abplattung, ausgebildet ist.

5. Flusszelle nach einem der Ansprüche 1 bis 4,
**dadurch gekennzeichnet,**
**dass** die zu der Folie parallele Randfläche (41) der Sperrwand (16c) eine entgegen der Strömungsrichtung vorspringende Ausbuchtung (42) aufweist.

6. Flusszelle nach einem der Ansprüche 1 bis 5,
**dadurch gekennzeichnet,**
**dass** der Kanal (7-9;20) in dem die Sollbruchstelle aufweisenden Kanalbereich (14) gegenüber daran in Strömungsrichtung angrenzenden Kanalbereichen im Querschnitt erweitert oder verengt ist.

7. Flusszelle nach einem der Ansprüche 1 bis 6,
**dadurch gekennzeichnet,**
**dass** der Kanal (7-9;20) durch an der Sollbruchstelle in Strömungsrichtung anliegenden Fluiddruck oder durch mechanische oder/und pneumatische Auslenkung der Folie (3), insbesondere durch ein Betriebsgerät, aufbrechbar ist.

8. Flusszelle nach einem der Ansprüche 1 bis 7,
**dadurch gekennzeichnet,**
**dass** die Folie (3) an der Randfläche der Sperrwand (16) mit der Sperrwand (16) verklebt oder/und verschweißt oder durch ein bewegliches, ggf. mit der Flusszelle verbundenes Klemmelement verklemmt ist.

9. Flusszelle nach einem der Ansprüche 1 bis 8,
**dadurch gekennzeichnet,**
**dass** die Ausnehmung (15) zu einer ebenen Fläche eines vorzugsweise plattenförmigen Substrats (1) hin offen ist.

10. Flusszelle nach einem der Ansprüche 1 bis 9,
**dadurch gekennzeichnet,**
**dass** in zur ebenen Fläche senkrechter Projektion die Sollbruchstelle im Projektionsbereich des Speicherbereichs (19) liegt.

11. Flusszelle nach einem der Ansprüche 1 bis 10,
**dadurch gekennzeichnet,**
**dass** der Kanal (20) mehrere Sollbruchstellen (16,16') aufweist, wobei vorzugsweise zwischen zwei Sollbruchstellen eine Trockenreagenz eingeschlossen ist.

12. Flusszelle nach einem der Ansprüche 1 bis 11,
**dadurch gekennzeichnet,**
**dass** der Speicherbereich (10;19) durch das Substrat (1) und eine in dem Speicherbereich ggf. tiefgezogene, auf einer Seite des Substrats (1) angeordnete Folie (2) begrenzt, über einen Kanalabschnitt (23) mit dem Kanalbereich verbunden und die den Kanalbereich begrenzende Folie (3) auf der anderen Seite des Substrats (1) angeordnet ist.

13. Flusszelle nach Anspruch 12,
**dadurch gekennzeichnet,**
**dass** die den Speicherbereich (10;19) begrenzende Folie (2) ein Aluminium-Kunststoff-Laminat mit einer dem Speicherbereich zugewandten Kunststoffschicht ist.

14. Flusszelle nach Anspruch 12 oder 13,
**dadurch gekennzeichnet,**
**dass** das Substrat wenigstens auf einer Seite eine die Verbindung mit der betreffenden Folie (2,3) erleichternde Oberflächenstrukturierung, insbesondere Gräben, aufweist.

15. Flusszelle nach einem der Ansprüche 1 bis 13,
**dadurch gekennzeichnet,**
**dass** die den Kanalbereich begrenzende Folie (3) eine ggf. durch ein Aluminium-Kunststoff-Laminat abgedeckte Kunststofffolie ist.

16. Flusszelle nach einem der Ansprüche 11 bis 15,
**dadurch gekennzeichnet,**
**dass** die den Kanalbereich begrenzende Folie (3) als eine zusammenhängend eine Vielzahl von Speicherbereichen begrenzende Folie ausgebildet ist.

## Claims

1. Flow cell, in particular for analyzing or/and synthesizing substances, having at least one storage zone (10; 19; 33) which is connected to a duct (7-9; 20) for transporting fluid from, into, or/and through the storage zone, wherein the duct has a duct zone (14) that is delimited by a substrate (1) and by a film (3) which is connected to the substrate, in which duct zone the duct is closed off and at a predetermined breaking point is openable while deflecting the film, wherein the film covers a clearance (15) in the substrate that forms the duct zone, and a barrier wall (16) which is integrally connected to the substrate and which shuts off the duct is disposed in the clearance, and the predetermined breaking point is formed by a rupturable connection zone between the film and a peripheral portion (17) of the barrier wall that faces the film,
**characterized in**
**that** the thickness of the barrier wall (16) decreases toward the film (3), and the dimensions of a peripheral area of the barrier wall that is parallel with the film and is formed in the peripheral portion are decisive to the planar extent of the connection zone.

2. Flow cell according to Claim 1,
**characterized in**
**that** the peripheral area approximates a line that is perpendicular to the flow direction.

3. Flow cell according to Claim 1 or 2, **characterized in**
**that** the barrier wall is configured as a barrier web (16) that traverses the clearance (15), and said barrier web (16) at the ends thereof and on the peripheral portion that is opposite the peripheral area is connected to the substrate (1).

4. Flow cell according to one of Claims 1 to 3, **characterized in**
**that** the barrier wall (16), in the cross section, is configured so as to be triangular or segment-shaped, optionally having a flattening that faces the film.

5. Flow cell according to one of Claims 1 to 4, **characterized in**
**that** the peripheral area (41) of the barrier wall (16c) that is parallel with the film has a bulge (42) that protrudes counter to the flow direction.

6. Flow cell according to one of Claims 1 to 5, **characterized in**
**that** the duct (7-9; 20), in that duct zone (14) that has the predetermined breaking point, in relation to duct zones that are adjacent thereto in the flow direction, is widened or constricted in the cross section.

7. Flow cell according to one of Claims 1 to 6, **characterized in**
**that** the duct (7-9; 20) is rupturable by way of a fluid pressure that bears on the predetermined breaking point in the flow direction, or by way of
mechanical or/and pneumatic deflection of the film (3), in particular by an operating apparatus.

8. Flow cell according to one of Claims 1 to 7, **characterized in**
**that** the film (3) at the peripheral area of the barrier wall (16) is adhesively bonded or/and welded to the barrier wall (16), or is jammed to the latter by way of a movable clamping element that is optionally connected to the flow cell.

9. Flow cell according to one of Claims 1 to 8, **characterized in**
**that** the clearance (15) is open toward a planar area of a preferably plate-shaped substrate (1).

10. Flow cell according to one of Claims 1 to 9, **characterized in**
**that** the predetermined breaking point in a projection that is perpendicular to the planar area lies in the projected zone of the storage zone (19).

11. Flow cell according to one of Claims 1 to 10, **characterized in**
**that** the duct (20) has a plurality of predetermined breaking points (16, 16'), wherein a drying reagent is preferably enclosed between two predetermined breaking points.

12. Flow cell according to one of Claims 1 to 11, **characterized in**
**that** the storage zone (10; 19) is delimited by the substrate (1) and a film (2) which is optionally thermoformed in the storage zone and is disposed on one side of the substrate (1), by way of a duct portion (23) is connected to the duct zone, and
the film (3) that delimits the duct zone is disposed on the other side of the substrate (1).

13. Flow cell according to Claim 12, **characterized in that** the film (2) that delimits the storage zone (10; 19) is an aluminum-plastics laminate having a plastics layer that faces the storage zone.

14. Flow cell according to Claim 12 or 13, **characterized in**
**that** the substrate at least on one side has a surface structure, in particular trenches, that facilitates the connection to the respective film (2, 3).

15. Flow cell according to one of Claims 1 to 13, **characterized in**
**that** the film (3) that delimits the duct zone is a plastics film which is optionally covered by an aluminum-plastics laminate.

16. Flow cell according to one of Claims 11 to 15, **characterized in**
**that** the film (3) that delimits the duct zone is configured as a contiguous film that delimits a multiplicity of storage zones.

## Revendications

1. Cellule d'écoulement, en particulier pour l'analyse et/ou la synthèse de substances, présentant au moins une zone d'accumulation (10;19;33), qui est reliée à un canal (7-9;20) pour le transport de fluide hors de, dans et/ou à travers la zone d'accumulation, le canal présentant une zone (14) de canal délimitée par un substrat (1) et par une feuille (3) reliée au substrat, dans laquelle le canal est fermé et peut être ouvert au niveau d'un point de rupture avec déformation de la feuille, la feuille recouvrant un évidement (15) dans le substrat, formant la zone de canal, et une paroi de blocage (16) fermant le canal, reliée en une seule pièce avec le substrat, étant disposée dans l'évidement et le point de rupture étant formé par une zone de liaison pouvant casser entre la feuille et une section de bord (17) orientée vers la feuille de la paroi de blocage, **caractérisée en ce que** l'épaisseur de la paroi de blocage (16) diminue dans le sens vers la feuille (3) et les dimensions d'une surface de bord formée dans la section de bord, parallèle à la feuille, de la paroi de blocage sont déterminantes pour l'extension surfacique de la zone de liaison.

2. Cellule d'écoulement selon la revendication 1, **caractérisée en ce que** la surface de bord s'approche d'une ligne perpendiculaire à la ligne d'écoulement.

3. Cellule d'écoulement selon la revendication 1 ou 2, **caractérisée en ce que** la paroi de blocage est réalisée sous forme d'une âme de blocage (16) traversant l'évidement (15), reliée au substrat (1) en ses extrémités ainsi qu'au niveau de la section de bord opposée à la surface de bord.

4. Cellule d'écoulement selon l'une quelconque des revendications 1 à 3, **caractérisée en ce que** la paroi de blocage (16) présente une section transversale triangulaire ou en arc de cercle, le cas échéant pourvue d'un aplatissement orienté vers la feuille.

5. Cellule d'écoulement selon l'une quelconque des revendications 1 à 4, **caractérisée en ce que** la surface de bord (41) parallèle à la feuille de la paroi de blocage (16c) présente un renflement (42) en saillie contre la direction d'écoulement.

6. Cellule d'écoulement selon l'une quelconque des revendications 1 à 5, **caractérisée en ce que** la section du canal (7-9;20) est élargie ou rétrécie dans la zone de canal (14) présentant le point de rupture à l'opposé de zones de canal adjacentes dans la direction d'écoulement.

7. Cellule d'écoulement selon l'une quelconque des revendications 1 à 6, **caractérisée en ce que** le canal (7-9;20) peut être ouvert par la pression fluidique qui existe au niveau du point de rupture dans la direction d'écoulement ou par une déformation mécanique et/ou pneumatique de la feuille (3), en particulier par un module de commande.

8. Cellule d'écoulement selon l'une quelconque des revendications 1 à 7, **caractérisée en ce que** la feuille (3) est collée et/ou soudée à la paroi de blocage (16) au niveau de la surface de bord de la paroi de blocage (16) ou est enserrée par un élément de serrage mobile, le cas échéant relié à la cellule d'écoulement.

9. Cellule d'écoulement selon l'une quelconque des revendications 1 à 8, **caractérisée en ce que** l'évidement (15) est ouvert vers une surface plane d'un substrat (1) de préférence sous forme de plaque.

10. Cellule d'écoulement selon l'une quelconque des revendications 1 à 9, **caractérisée en ce que**, dans une projection perpendiculaire à la surface plane, le point de rupture se situe dans la zone de projection de la zone d'accumulation (19).

11. Cellule d'écoulement selon l'une quelconque des revendications 1 à 10, **caractérisée en ce que** le canal (20) présente plusieurs points de rupture (16,16'), un réactif sec étant de préférence enfermé entre deux points de rupture.

12. Cellule d'écoulement selon l'une quelconque des revendications 1 à 11, **caractérisée en ce que** la zone d'accumulation (10;19) est délimitée par le substrat (1) et par une feuille (2), le cas échéant emboutie, dans la zone d'accumulation, disposée sur un côté du substrat (1), est reliée à la zone de canal via une section de canal (23) et la feuille (3) délimitant la zone de canal est disposée sur l'autre côté du substrat (1).

13. Cellule d'écoulement selon la revendication 12, **caractérisée en ce que** la feuille (2) délimitant la zone d'accumulation (10;19) est un stratifié d'aluminium-matériau synthétique présentant une couche en matériau synthétique orientée vers la zone d'accumulation.

14. Cellule d'écoulement selon la revendication 12 ou 13, **caractérisée en ce que** le substrat présente, au moins sur un côté, une structuration de surface, en particulier des sillons, facilitant la liaison avec la feuille (2,3) en question.

15. Cellule d'écoulement selon l'une quelconque des revendications 1 à 13, **caractérisée en ce que** la feuille (3) délimitant la zone de canal est une feuille en matériau synthétique le cas échéant recouverte par un stratifié d'aluminium-matériau synthétique.

16. Cellule d'écoulement selon l'une quelconque des revendications 11 à 15, **caractérisée en ce que** la feuille (3) délimitant la zone de canal est réalisée sous forme d'une feuille cohérente, délimitant une pluralité de zones d'accumulation.
